**Europäisches Patentamt**

**European Patent Office**

**Office européen des brevets**

(19)

(11) Veröffentlichungsnummer: **0 052 835**
**B1**

(12) # EUROPÄISCHE PATENTSCHRIFT

(45) Veröffentlichungstag der Patentschrift:
**13.02.85**

(51) Int. Cl.⁴: **H 04 M 19/04**

(21) Anmeldenummer: **81109639.5**

(22) Anmeldetag: **12.11.81**

(54) **Schaltungsanordnung zur Ableitung einer Steuergrösse zum Freigeben und Sperren der Tonaussendung bei einer Tonrufschaltung für Fernmeldeanlagen.**

(30) Priorität: **20.11.80 DE 3043753**

(43) Veröffentlichungstag der Anmeldung:
**02.06.82 Patentblatt 82/22**

(45) Bekanntmachung des Hinweises auf die Patenterteilung:
**13.02.85 Patentblatt 85/7**

(84) Benannte Vertragsstaaten:
**AT BE DE FR IT NL**

(56) Entgegenhaltungen:
**BE - A - 637 296**
**CH - A - 412 015**
**DE - A - 2 826 851**
**US - A - 4 081 617**

(73) Patentinhaber: **Licentia Patent-Verwaltungs-GmbH,
Theodor-Stern-Kai 1, D-6000 Frankfurt/Main 70 (DE)**

(72) Erfinder: **Beck, Franz, Dr.-Ing., Dietenbronn 5/1,
D-7959 Schwendi (DE)**
Erfinder: **Bergmann, Günther, Dr.-Ing., Oberer
Wiesenweg 41, D-7906 Blaustein-Arnegg (DE)**
Erfinder: **Rall, Bernhard, Dipl.-Ing., Albecker Steige 67,
D-7900 Ulm (DE)**

(74) Vertreter: **Schickle, Gerhard, Dipl.-Ing. et al, Licentia
Patent-Verwaltungs-GmbH Theodor-Stern-Kai 1,
D-6000 Frankfurt/Main 70 (DE)**

## Beschreibung

Die Erfindung betrifft eine Schaltungsanordnung zur Ableitung einer Steuergröße zum Freigeben und Sperren der Tonaussendung bei einer Tonrufschaltung für Fernmeldeanlagen gemäß dem Oberbegriff des Patentanspruchs 1.

Anstelle des Wechselstromweckers soll in neuzeitlichen Fernsprechapparaten der sog. Tonruf eingeführt werden, der als Ruforgan eine Anordnung (Tonrufschaltung) zur Erzeugung einer Tonfolge aufweist. Zur Stromversorgung einer Tonrufschaltung wird die gleichgerichtete Rufwechselspannung von 25 Hz oder 50 Hz verwendet. Dazu wird ein Gleichrichter mit nachgeschaltetem Siebkondensator benutzt, an den im einfachsten Fall als Last ein tonfrequenter Schwingungserzeuger mit Lautsprecher angeschlossen sein könnte. Der Benutzer kann dann die Lautstärke der von dieser Last ausgesendeten Tonaussendung einstellen, was aber zur Folge hat, daß sich dabei die Belastung des Gleichrichters und des Siebkondensators ändert. Je nach der Belastung entlädt sich der Siebkondensator nach dem Ende eines Rufwechselspannungszuges jeweils mit unterschiedlicher Geschwindigkeit. Wenn nun der Fernsprechteilnehmer eine solche Tonrufschaltung auf eine geringe Lautstärke einstellt, wird die gleichgerichtete Rufwechselspannung nach dem Ende des üblicherweise eine Sekunde dauernden Rufwechselspannungszuges nur sehr langsam abgebaut, so daß der Tonruf bis zu 3 Sekunden lang ausklingen würde. Vorgeschrieben ist aber eine Toleranz von ±100 ms. Außerdem muß dafür gesorgt werden, daß die Tonrufschaltung nur oberhalb eines bestimmten Mindestwertes der Rufwechselspannung anspricht, um die Vortäuschung eines Rufes durch Störspannungen zu vermeiden.

Aus der DE-OS 2 826 851 ist eine Schaltungsanordnung der eingangs genannten Art bekannt. Der Brückengleichrichter ist jedoch von der Teilnehmeranschlußleitung nicht galvanisch getrennt, so daß sowohl die Rufwechselspannung als auch die Speisegleichspannung für das Fernsprechgerät am Brückengleichrichter und an den beiden in Reihe geschalteten Zweipolen anliegt. Erst der gemeinsame Verbindungspunkt der Zweipole ist galvanisch von der nachfolgenden Schaltung, bestehend, außer einem Schalter mit Ein- und Abschaltschwelle, aus einem Bandpaßfilter, einem Operationsverstärker und einem Speicherzähler, getrennt.

Aus der BE-PS 637 296 ist eine elektronische Tonrufschaltung bekannt, bei der die für die Dauer eines Tonrufs auftretende Steuerspannung einem galvanisch von der Teilnehmeranschlußleitung getrennten Brückengleichrichter entnommen wird. Die beiden in Reihe geschalteten Zweipole sind jedoch parallel zu einer Brückengleichrichterdiode geschaltet. Dadurch wird an deren Verbindungspunkt ein mit der Frequenz der Rufwechselspannung intermittierendes Steuersignal für die Tonrufschaltung erzeugt.

Der vorliegenden Erfindung liegt die Aufgabe zugrunde, bei einer Schaltungsanordnung der im Oberbegriff des Patentanspruchs 1 genannten Art zur Steuerung eines Tonrufschaltkreises eine der Tonrufdauer zeitlich entsprechende Steuergleichspannung mit möglichst geringem Schaltungsaufwand zu erzeugen, wobei Falschauslösungen eines Tonrufes durch Störspannungen weitgehend vermieden werden sollen.

Diese Aufgabe wird durch die im Anspruch 1 gekennzeichneten Merkmale gelöst. Durch die galvanische Trennung des Brückengleichrichters von der Teilnehmeranschlußleitung kann unmittelbar die beim Erscheinen einer Rufwechselspannung am gemeinsamen Verbindungspunkt der Zweipole entstehende Gleichspannung zum Steuern des Schalters mit Ein- und Abschaltschwelle benutzt werden, so daß die erfindungsgemäße Schaltung mit sehr wenigen Bauteilen auskommt.

Vorteilhafte Ausgestaltungen der Erfindung sind in den Unteransprüchen angegeben. Sie geben besonders einfache Schaltungen und Schaltungsmaßnahmen für den Tiefpaß, die Störspannungsunterdrückung und die vorschriftsmäßige Tonaussendung.

Die Erfindung wird nun anhand von Zeichnungen und eines bevorzugten Ausführungsbeispiels näher erläutert. Es zeigt

Fig. 1 eine bisher übliche Schaltungsanordnung eines Fernsprechapparates ohne Wählorgane;

Fig. 2 eine naheliegende Schaltungsanordnung für eine Stromversorgung für eine Tonrufschaltung;

Fig. 3 Spannungsverläufe zu Fig. 2;

Fig. 4 ein bevorzugtes Ausführungsbeispiel nach der Erfindung;

Fig. 5 Spannungsverläufe zu Fig. 4.

Gleiche Bezugszeichen in den Figuren weisen auf gleiche Teile hin.

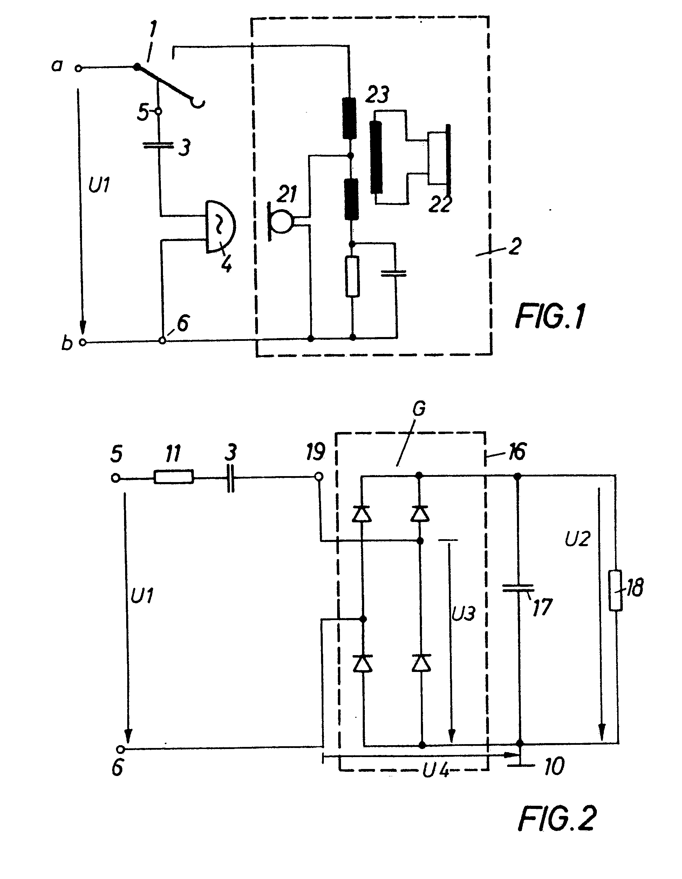

In Fig. 1 schaltet ein Hakenumschalter 1 im Ruhezustand einen Wechselstromwecker 4 über einen Kondensator 3 an eine a- und eine b-Ader. Diese Adern dienen zur Fort- und Herleitung von Sprech- und Hörströmen sowie von Rufwechselstromstößen. Bei Entlastung des Hakenumschalters 1 wird eine Sprechschaltung 2 an die a- und die b-Ader geschaltet. Diese Sprechschaltung 2 enthält ein Mikrofon 21, eine Hörkapsel 22 und einen Übertrager 23. Durch eine Tonrufschaltung nach der Erfindung soll nun der Wechselstromwecker 4 mit dem Kondensator 3 zwischen den Anschlußpunkten 5 und 6 ersetzt werden.

Wenn dabei der Weg nach Fig. 2 beschritten würde, so ergäben sich die schon oben angedeuteten Schwierigkeiten. In Fig. 2 ist zwischen den Anschlußpunkten 5 und 6 ein (Brücken-) Gleichrichter G vorgesehen mit einem nachgeschalteten Siebkondensator 17, der einseitig auf Masse 10 und damit einem Potential liegt, das als Bezugspotential dient. Anschließend folgt als Last 18 ein Tonfrequenzerzeuger mit Lautspre-

cher zur Tonaussendung. Als Tonfrequenzerzeuger kann ein integrierter Schaltkreis mit Übertragerausgang benutzt werden. Der Siebkondensator 17 und die Last 18 bilden zusammen einen Lastspeicherkreis, wobei die Last 18 bei größter eingestellter Lautstärke der Tonaussendung einen Ersatzwiderstand von 10 kΩ und bei kleinster Lautstärke von 100 bis 300 kΩ bildet. Der Siebkondensator 17 hat einen Wert von ungefähr 10 μF. Die Spannung U2 an der Last 18 kann zwischen 20 und 110 V schwanken, wenn sie nicht durch besondere Begrenzungsmittel begrenzt wird. Ein Widerstand 11 schützt die gezeigte Schaltungsanordnung vor Überspannungsimpulsen und hat einen Wert von 100 bis 500 Ω.

Die Schwierigkeit bei dieser Schaltungsanordnung besteht nun unter anderem darin, daß sich die Entladezeitkonstante des Lastspeicherkreises 17, 18 je nach Lautstärkeeinstellung der Tonaussendung ändert und daß die Tonaussendung wegen des langsamen Absinkens der Spannung U2 viel länger andauert, als ein jeweiliger Rufwechselspannungszug an den Anschlußpunkten 5 und 6.

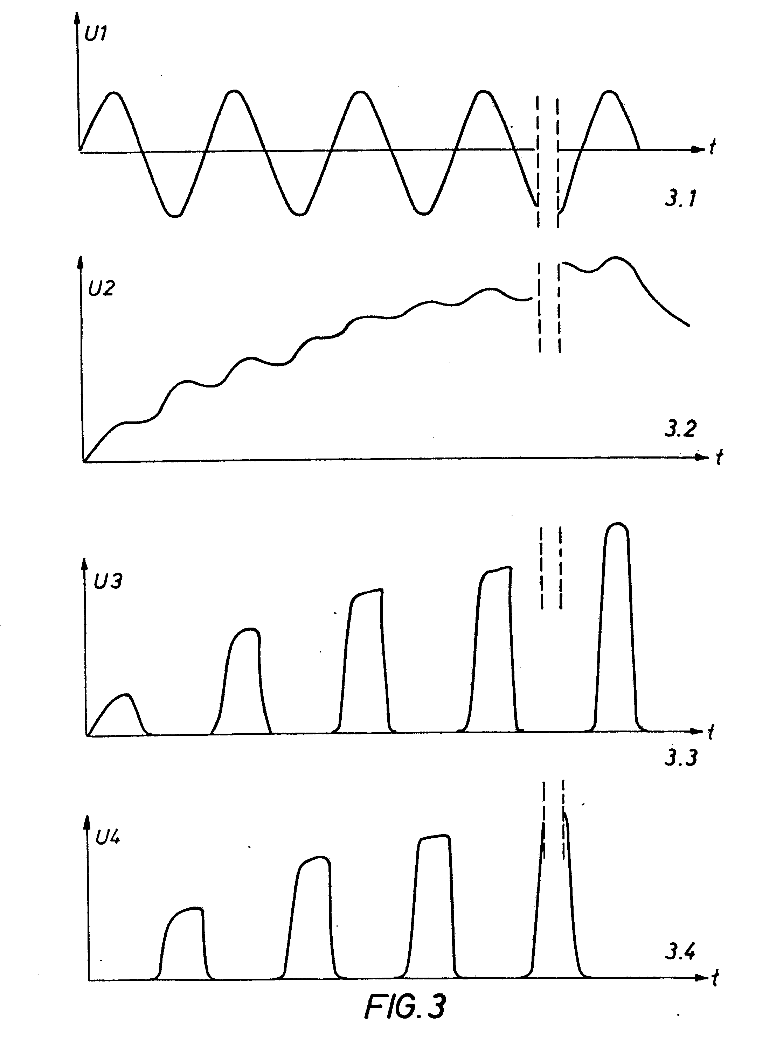

Die Fig. 3 zeigt unter 3.1 die Rufwechselspannung U1, unter 3.2 den Aufbau und den Verlauf der Gleichspannung U2 in Abhängigkeit von der Zeit t, unter 3.3 und 3.4 den Spannungsverlauf U3 und U4 (vgl. die Spannungspfeile in Fig. 2). Man kann sich die Verläufe der Teilfiguren 3.3 und 3.4 leicht erklären, wenn man den Brückengleichrichter G als Schalter ansieht, der für die Dauer eines Umladestromes des Kondensators 3 jeweils den positiveren der Schaltungspunkte 19 oder 6 an den Schaltungspunkt 16 schaltet und den negativeren der Schaltungspunkte 19 oder 6 an Masse 10.

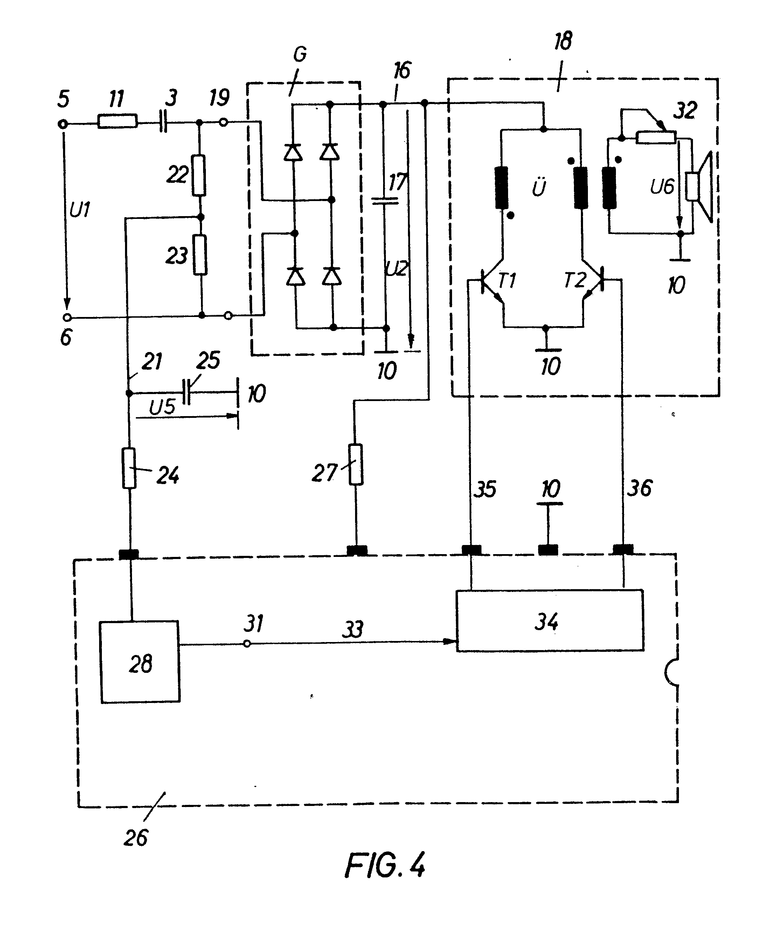

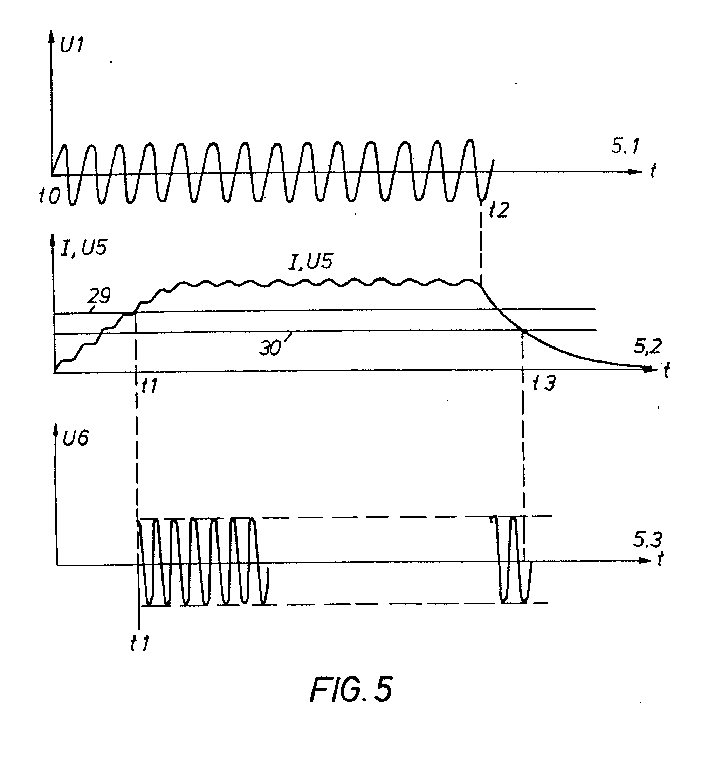

Diese Betrachtungsweise wird bei dem bevorzugten Ausführungsbeispiel nach Fig. 4 ausgenutzt, um auf einfache Weise, d. h., ohne einen weiteren Gleichrichter, eine gleichgerichtete, der Rufwechselspannung U1 proportionale Steuergröße für die Tonaussendung zu erhalten. Stellt man sich zwischen den Schaltungspunkten 19 und 6 einerseits und Masse 10 andererseits je einen hochohmigen Widerstand geschaltet vor, so ergibt die Summe I der durch sie fließenden Ströme eine Überlagerung der Kurven nach den Fig. 3.3 und 3.4. Zur schaltungstechnischen Verwirklichung sind zwei passive Zweipole, bevorzugt Kondensatoren oder Widerstände, nämlich die untereinander gleich bemessenen Widerstände 22, 23 in Reihenschaltung zwischen den Wechselspannungseingangsklemmen des Brückengleichrichters G vorgesehen mit ihrem gemeinsamen Verbindungspunkt 21. Diese Reihenschaltung bildet gegenüber der auf Bezugspotential liegenden Masse 10 eine Spannungsquelle mit einem Innenwiderstand entsprechend der Parallelschaltung der Widerstände 22 und 23 und mit der Hälfte (U5 in Fig. 5.2) derjenigen Spannung, die sich zusammensetzt aus der Spannung am Schaltungspunkt 19 gegenüber dem Bezugspotential und der Spannung am Schaltungspunkt 6 gegenüber dem Bezugspotential.

Zur Glättung dieser Spannung U5 dient ein zwischen dem Verbindungspunkt 21 und Masse 10 geschalteter Kondensator 25, wobei diese Spannung U5 (Fig. 5.2) oder ein stattdessen als Steuergröße ableitbarer Strom einem Tonrufschaltkreis 26 über einen Widerstand 24 zugeführt wird. Dabei bilden die Widerstände 23 und 24 in Verbindung mit dem Kondensator 25 als Tiefpaß eine sehr unaufwendige Siebschaltung. Durch Wahl der Widerstände 22 bis 24 in der Größenordnung von 1 MΩ erreicht man eine vollständige Entkopplung von der Last 18. Wählt man für den Kondensator 25 eine Kapazität von 0,33 μF, so ist mit einer Zeitkonstante von 100 ms eine vollständige Glättung der Spannung U5 erreichbar.

Bevor die Wirkungsweise erläutert wird, ist zu erwähnen, daß die Last 18, außer einem Übertrager Ü mit nachgeschaltetem Lautsprecher 32 zur Tonaussendung, zwei Transistoren T1 und T2 zur Verstärkung tonfrequenter Schwingungen enthält, die — gesteuert von dem Tonrufschaltkreis 26 — zu den Basen der Transistoren gelangen. Die Kollektoren sind über je eine Wicklung des Übertragers Ü zur Stromversorgung an den Schaltungspunkt 16 und damit an den Siebkondensator 17 und den Brückengleichrichter G angeschlossen. Ein in dem Tonrufschaltkreis 26 enthaltener Schalter 28 hat eine Einschaltschwelle, gekennzeichnet durch die Linie 29 in Fig. 5.2, und bevorzugt eine Abschaltschwelle 30, die unterhalb der Einschaltschwelle 29 liegt.

Übersteigt nun nach dem Beginn zur Zeit t0 eines Rufwechselspannungszuges U1 (Fig. 5.1) die über den Widerstand 24 zugeführte Steuergröße U5 zur Zeit t1 (Fig. 5.2) die Einschaltschwelle 29, so wird durch einen stufenförmigen Anstieg der Spannung an einem Ausgang 31 des Schalters 28 über eine angedeutete Steuerleitung 33 ein tonfrequenter Schwingungserzeuger 34 aktiviert, der über Leitungen 35 und 36 eine tonfrequente Schwingung an die Basen der Transistoren T1, T2 liefert. Damit erfolgt durch den Lautsprecher 32 eine Tonaussendung infolge der am Lautsprecher anliegenden Spannung U6 (Fig. 5.3). Nach dem Ende der Rufwechselspannung U1 zur Zeit t2 klingt die Spannung U5 ab und schaltet beim Unterschreiten der Abschaltschwelle 30 die Transistoren und damit die Spannung U6, also die Tonaussendung, zur Zeit t3 wieder ab.

Diese Zeitsteuerung hat mit den Schwellen 29 und 30 auch die Funktion einer Störspannungsunterdrückung. Es kann damit erreicht werden, daß keine Tonrufaussendung stattfindet, solange die Rufwechselspannung beispielsweise unterhalb 9 V liegt, so daß also zum Beispiel 16 kHz-Zählimpulse keine Falschauslösung des Tonrufes hervorrufen. Zweckmäßigerweise wird die Einschaltschwelle des Schalters 28 zur Störunterdrückung so gelegt, daß eine Tonaussendung nur erfolgt, wenn U2 über etwa 15 V liegt.

Der besondere Vorteil der erfindungsgemäßen Schaltungsanordnung ist ihr geringer Aufwand (lediglich die Widerstände 22 bis 24 und der Kondensator 25) und die damit gleichzeitig erreichbaren Wirkungen der Störunterdrückung und Zeitsteuerung.

## Patentansprüche

1. Schaltungsanordnung zur Ableitung einer für die Dauer eines Tonrufes konstanten, der Tonrufdauer zeitlich entsprechenden Steuergleichspannung (U5) zum Freigeben und Sperren der Tonaussendung einer Tonrufschaltung für Fernmeldeanlagen, die von einer Rufwechselspannung (U1) gespeist und mit einem Brückengleichrichter (G) und weiteren elektronischen Schaltelementen zur Tonaussendung ausgerüstet ist, mit zwei vorzugsweise untereinander gleich große Impedanzen aufweisenden passiven Zweipolen (22, 23), die in Reihe zueinander geschaltet und mit den Wechselspannungseingängen (19, 6) des Brückengleichrichters (G) verbunden sind und deren gemeinsamer Verbindungspunkt (21) als Quelle für die Steuergröße (U5) dient, mit einer Tiefpaß- (22, 23, 24, 25) oder Siebschaltung zur Glättung dieser Steuergröße (U5) und einem Schalter (28) mit Einschaltschwelle (29) und Abschaltschwelle (30) zum Freigeben und Sperren der Tonaussendung, dadurch gekennzeichnet, daß der Brückengleichrichter (G) von der Teilnehmeranschlußleitung mittels eines Kondensators (3) galvanisch getrennt ist und der Verbindungspunkt der in Reihe geschalteten Zweipole (22, 23) galvanisch mit dem Tiefpaß (22, 23, 24, 25) und über einen Widerstand (24) mit dem Schalter (28) verbunden ist.

2. Schaltungsanordnung nach Anspruch 1, dadurch gekennzeichnet, daß der Tiefpaß durch die in Reihe geschalteten Zweipole (22, 23), den mit dem Schalter (28) verbundenen Widerstand (24) und einen zwischen dem Verbindungspunkt (21) der in Reihe geschalteten Zweipole (22, 23) und Masse (10) geschalteten Kondensator (25) gebildet ist.

3. Schaltungsanordnung nach Anspruch 1 oder 2, dadurch gekennzeichnet, daß die Zweipole Widerstände (22, 23) sind, die hochohmig gegenüber der Last (18) des Brückengleichrichters (G) gewählt sind, daß die Tiefpaß- bzw. Siebschaltungs-Zeitkonstante kleiner oder gleich der Zeitkonstante eines Lastspeicherkreises (17, 18) ist und daß die Einschaltschwelle (29) so eingestellt ist, daß bei der minimal zulässigen Rufwechselspannung (U1) gerade noch eine Tonaussendung erfolgt.

4. Schaltung nach einem der Ansprüche 1 bis 3, dadurch gekennzeichnet, daß die Abschaltschwelle (30) des Schalters (28) tiefer als die Einschaltschwelle (29) gewählt und so eingestellt ist, daß bei den üblicherweise auftretenden und der Steuergröße (U5) überlagerten Wechselgrößen kurzzeitige Unterbrechungen der Tonaussendung während der Dauer (T0 bis T2) eines Rufes unterdrückt werden.

## Claims

1. Circuit arrangement for the derivation of a control d. c. voltage (U5) remaining constant for the duration of a tone ring and corresponding time-wise to the duration of the tone ring, to release and block the tone emission of a tone ringing circuit for communication systems fed by a ringing a—c voltage (U1) and provided with a bridge-connected rectifier (G) and further electronic circuit components for the tone emission, with two passive, series-connected two-terminal networks (22, 23) which preferably exhibit equally large impedances and are connected to the a—c voltage inputs (19, 6) of the bridge-connected rectifier (G), and whose common connection point (21) acts as source for the control quantity (U5), with a low-pass filter (22, 23, 24, 25) or filter network for smoothing this control quantity (U5) and a switch (28) with switch-on threshold (29) and switch-off threshold (30) to release and block the tone emission, characterized in that the bridge-connected rectifier (G) is galvanically separated from the subscriber's line by a capacitor (3), and in that the connection point of the series-connected two-terminal networks (22, 23) is galvanically connected to the low-pass filter (22, 23, 24, 25) and to the switch (28) via a resistor (24).

2. Circuit arrangement according to claim 1, characterized in that the low-pass filter is constituted by the series-connected two-terminal networks (22, 23), the resistor (24) connected to the switch (28) and a capacitor (25) connected between the connection point (21) of the series-connected two-terminal networks (22, 23) and ground (10).

3. Circuit arrangement according to claims 1 or 2, characterized in that the two-terminal networks are constituted by resistors (22, 23) of high resistance with respect to the load (18) of the bridge-connected rectifier (G), in that the low-pass filter or filter network time constant is smaller than or equal to the time constant of a load storage circuit (17, 18), and in that the switch-on threshold (29) is set so that at the lowest permissible ringing a—c voltage (U1) there is still just a tone emission.

4. Circuit according to one of claims 1 to 3, characterized in that the switch-off threshold (30) of the switch (28) is lower than the switch-on threshold (29) and is set so that with the commonly occurring alternating quantities superimposed on the control quantity (U5), short interruptions in the tone emission in the course of (T0 to T2) a ring are suppressed.

## Revendications

1. Montage pour la dérivation d'une tension continue de commande (U5), constante pendant la durée d'un appel par tonalités et de même durée que ce dernier, pour l'autorisation et le blocage de l'émission de tonalités d'un circuit d'appel par tonalités pour installations de télécommunication, ledit circuit d'appel étant alimenté par une tension alterantive d'appel (U1) et équipé d'un redresseur en pont (G) et d'autres composants électroniques pour l'émission de tonalités, avec deux dipôles passifs (22, 23), présentant de préférence la même impédance, branchés en série, reliés aux entrées (19, 6) de tension alternative du redresseur en pont (G), et dont le point de connexion commun (21) constitue la source de la grandeur de commande (U5), avec un filtre passe-bas (22, 23, 24, 25) ou un circuit de filtrage de cette grandeur de commande (U5) et un interrupteur (28) à seuil d'établissement (29) et seuil de coupure (30) pour l'autorisation et le blocage de l'émission de tonalités, ledit montage étant caractérisé en ce que le redresseur en pont (G) est séparé galvaniquement de la ligne d'abonné par un condensateur (3) et le point de connexion des dipôles (22, 23) branchés en série est relié galvaniquement au filtre passe-bas (22, 23, 24, 25) et, par une résistance (24), à l'interrupteur (28).

2. Montage selon revendication 1, caractérisé en ce que le filtre passe-bas est constitué par les dipôles (22, 23) branchés en série, la résistance (24) reliée à l'interrupteur (28) et un condensateur (25) branché entre le point de connexion (21) des dipôles (22, 23) en série et la masse (10).

3. Montage selon une des revendications 1 ou 2, caractérisé en ce que les dipôles sont des résistances (22, 23) de valeur élevée par rapport à la charge (18) du redresseur en pont (G); la constante de temps du filtre passe-bas ou du circuit de filtrage est inférieure ou égale à celle d'un circuit de charge à accumulation (17, 18); et le seuil d'établissement (29) est ajusté de façon qu'une émission de tonalités se produise encore juste pour la tension alternative d'appel minimale admissible (U1).

4. Montage selon une quelconque des revendications 1 à 3, caractérisé en ce que le seuil de coupure (30) de l'interrupteur (28) est inférieur au seuil d'établissement (29) et ajusté de façon qu'en présence des grandeurs alternatives apparaissant habituellement et se superposant à la grandeur de commande (U5), de brèves interruptions de l'émission de tonalités soient supprimées pendant la durée d'un appel (t0 à t2).

FIG.1

FIG.2

FIG.3

FIG. 4

FIG. 5